# EUROPEAN PATENT SPECIFICATION

(11) **EP 0 582 305 B1**
(45) Date of publication and mention of the grant of the patent: **29.12.1997**
(21) Application number: 93112604.9
(22) Date of filing: 05.08.1993
(51) Int. Cl.: H04N 5/44, H04N 5/21

(54) **Video signal converting device and noise eliminator**
Vorrichtung zur Videosignal-Umwandlung und Rauschunterdrückung
Dispositif de conversion de signal vidéo et éliminateur de bruit

(30) Priority: 28.08.1992 JP 229618/92; 06.08.1992 JP 233077/92
(43) Date of publication of application: 09.02.1994
(73) Proprietor: MATSUSHITA ELECTRIC INDUSTRIAL CO., LTD., Kadoma-shi, Osaka-fu, 571 (JP)
(72) Inventor: Izawa, Yosuke, Ibaraki-shi, Osaka 567 (JP); Okumura, Naoji, Minou-shi, Osaka 562 (JP)
(74) Representative: Grünecker, Kinkeldey, Stockmair & Schwanhäusser Anwaltssozietät

(56) References cited:
- EP-A- 0 287 174
- EP-A- 0 460 908
- GB-A- 2 212 360
- US-A- 4 841 366

## Description

The invention is related to a video signal converting device for changing the horizontal display length of an input video signal according to the aspect ratio of a display.

It is one of the trends in the development of television receivers to be larger in size and higher in image quality. More recently, the display device with an aspect ratio of 16:9, such as Hi-Vision television set, has come to be in a practical stage. When a television signal with a conventional aspect ratio of 4:3, as represented by the NTSC system, is displayed by a display device having an aspect ratio of 16:9, a round image detail is deformed into a wide ellipse, and therefore, to depict the image correctly, a video signal converting device for converting the horizontal display length of a video signal is needed.

In document EP-A1-460 908, a method and an apparatus are described for transforming video images to create special effects with a higher resolution in horizontal respect. It is described which ratios of oversampling and subsampling frequencies should be selected when reducing the length of a horizontal line and avoiding aliasing by overlapping signal spectra.

GB-A- 2 212 360 discloses a special effect system for a video signal especially providing turned and roll-up effect images appearing 3-dimensionally on a TV screen. Therefore, a write address generator is provided for determining a location of a video memory to store the digital video signal, a read address generator for generating a read address to read out the digital video signal from the video memory and a background adder for adding a background image to the digital video signal read out from the video memory. The co-ordinates which are used for reading out the video signal from the video memory are determined by selecting one of two calculated sets of x, y values which are calculated by adding to the actual x and y co-ordinates two different function values which depend on a prior determined distance value for the actual x, y co-ordinates.

An example of an ordinary video signal converting device is as follows. The video signal data is stored synchronised with the write address signal, and the stored address is read out synchronised with the read address signal. In this device, if the frequency is different between the read address signal and the write address signal, the horizontal display length of a video signal can be changed. Such method, however, requires clocks having different frequencies, a constitution of such a device complicated, interference is likely to occur between clocks and its countermeasure is difficult.

In EP-A-0 287 174 an apparatus is disclosed which is especially intended for use in a television receiver for displaying video signals, in which the luminance and the chrominance components are transmitted time multiplexed per line having an aspect ratio of 16:9 on a screen having a standard aspect ratio of 4:3. When cutting out horizontally only a central portion of a transmitted signal 16:9 picture for displaying this central portion without vertical reduction on a 4:3 screen, the time for displaying the central portion of each line has to correspond to the time which is used for transmitting a complete line. Therefore, the apparatus comprises a memory in which the digital video data of luminance and chrominance signals are read out with a slower data rate (13.5/6.75 MHz) then stored. An input video signal is transformed to a converted video signal by first reading out of a video memory subsequent values. In predetermined periodic intervals, a value is read out twice and the read out values are interpolated to obtain a converted video signal.

To satisfy the need for higher image quality, a noise eliminator for making the image clear is equally important.

US-A-4,841,366 is related to an apparatus for reducing the noise in a video signal without reducing the vertical resolution. Since the video information of the subsequent fields/frames usually shows a high correlation, while the noise is completely uncorrelated, the noise can be reduced by adding/subtracting video signals of subsequent fields/frames without adversely affecting the video information. When using field correlation the vertical resolution of the video information is reduced, since the video information of subsequent fields is shifted by one line. It is therefore suggested to use delay means which can be switched between a one-field delay and a one-field plus one-line delay. Using such switched delay means, the deterioration of the vertical resolution can be considerably reduced employing only a filed and a line memory.

The invention aims to achieve an improvement of known prior art video signal converting devices. This problem is solved by means of the features of claim 1 and claim 8.

The invention will now be described by way of example and with reference to the accompanying drawings in which:

Fig. 1 is a circuit diagram of a video signal converting device in an embodiment of the invention.

Fig. 2 is a timing chart for explaining the operation of the embodiment in Fig. 1.

Fig. 3 is a graph showing the relation of input signal and output signal in the embodiment in Fig. 1.

Fig. 4 is a circuit diagram of a second embodiment of the invention.

Fig. 5 is a timing chart for explaining the operation of the embodiment in Fig. 4.

Fig. 6 is a graph showing the relation between input signal and output signal in the embodiment in Fig. 4.

Fig. 7 is a circuit diagram of a third embodiment of the invention.

Fig. 8 is a timing chart for explaining the operation of an address generating circuit in Fig. 7.

Fig. 9 is a waveform diagram for explaining the noise eliminating operation in Fig. 7.

Fig. 10 is a timing chart (1) for explaining the operation of the embodiment in Fig. 7.

Fig. 11 is a timing chart (2) for explaining the operation of the embodiment in Fig. 7.

Fig. 12 is a graph showing the relation between input signal and output signal in the embodiment in Fig. 7.

### DESCRIPTION OF THE PREFERRED EMBODIMENTS

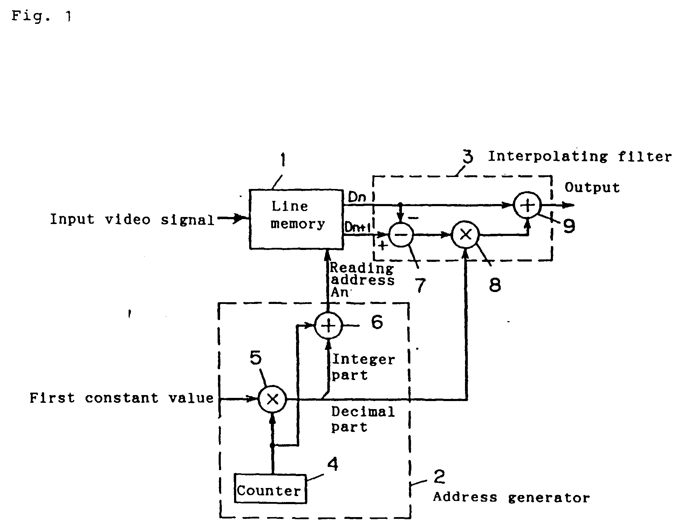

Fig. 1 shows a circuit diagram of a video signal converting device in an embodiment of the invention. In Fig. 1, a line memory 1 stores input signals sequentially from address 0, and when reading out, if the specified address is An, data Dn of An and data Dn+1 of next address An+1 are read out. A counter 4 counts the number of horizontal sampling pulses of video signals from zero at every increment of 1. A multiplier 5 multiplies a given first constant value and the output value of the counter 4. An adder 6 adds the integer part of the output of the multiplier 5 and the output of the counter 4, and the addition output is used in specifying the reading address of the line memory 1. A subtractor 7 subtracts Dn+1 from the output Dn of the line memory 1. A multiplier 8 multiplies the output of the subtractor 7 and the decimal part of the output of the multiplier 5. An adder 9 adds the output Dn of the line memory D1 and the output of the multiplier 8, and obtains an output signal.

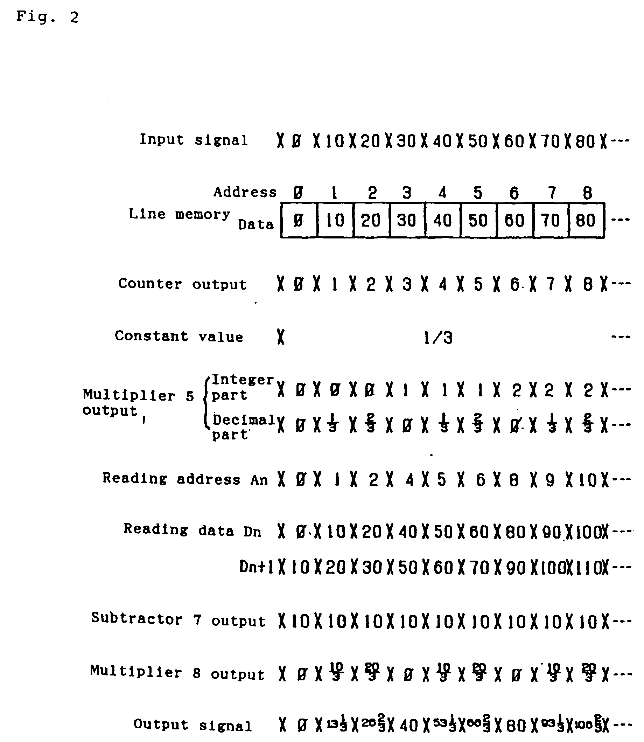

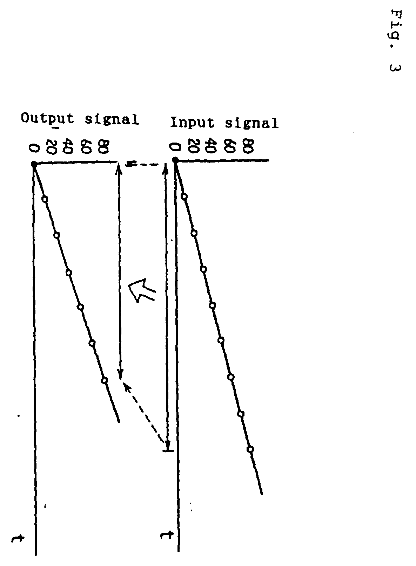

The circuit in Fig. 1 operates as follows (see Fig. 2). In the following explanation, for the sake of simplicity, the first constant value is supposed to be 1/3. First, input signals are stored in the line memory 1 sequentially from address 0. The value of counting one by one from 0 by the counter 4 and the constant value are multiplied by the multiplier 5, and the multiplication output is produced. This multiplication output is divided into the integer part and decimal part. The integer part is added to the output of the counter 4 by the adder 6, and this addition output is used in specifying the reading address of the line memory 1. Two sets of data Dn and Dn+1 in the specified address An and the next address An+1 are read out, and given to the subtractor 7. The difference of two sets of data given to the subtractor 7 is sent to the multiplier 8. The multiplier 8 multiplies this difference and the decimal part of the output of the multiplier 5. The adder 9 adds the output of the multiplier 8 and the data Dn read out from the line memory 1. As a result, a compressed video signal is obtained as shown in Fig. 3. Thus, by interpolating the data being read out from the line memory 1, compression of video signal is achieved by using only one clock.

The first constant value of 1/3 used in this explanation is not limited to 1/3, and any arbitrary value from 0 to 1 may be used. The conversion rate of the input video signal is given as 1/(x+1) where x is the first constant value.

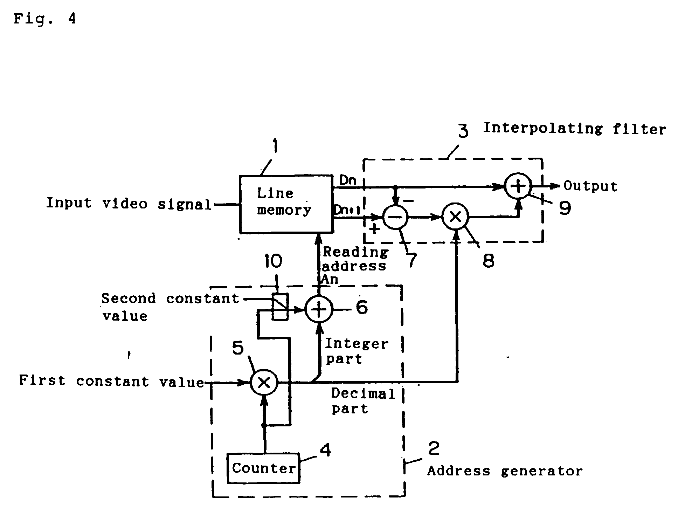

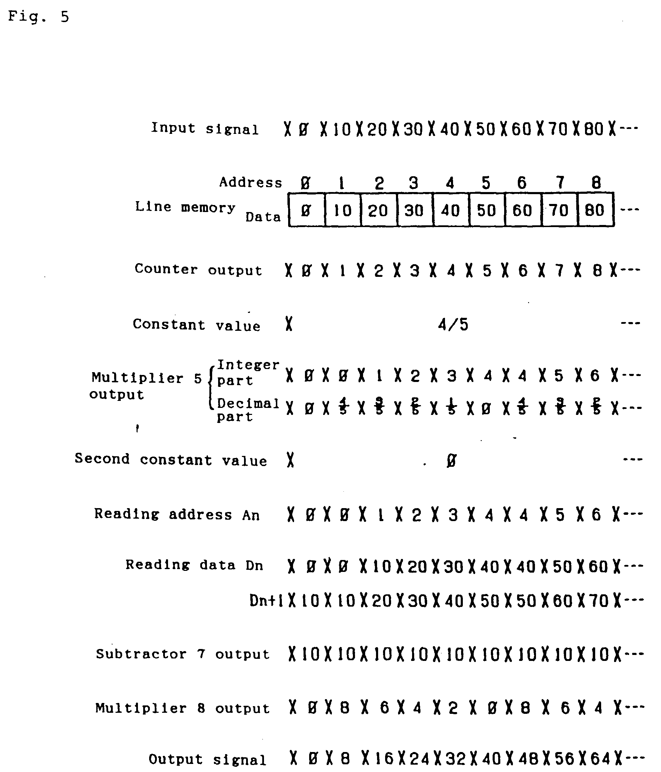

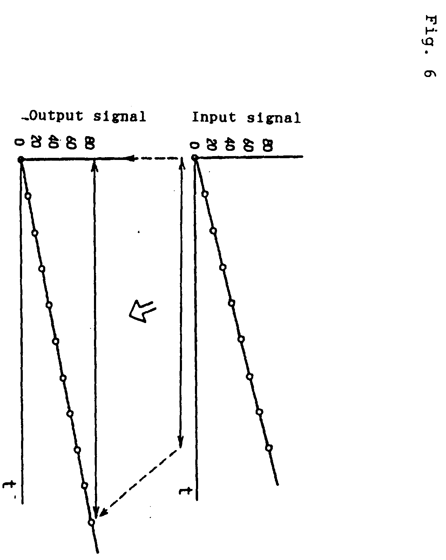

Fig. 4 relates to a second embodiment of the invention. What is different between the embodiment in Fig. 1 and the second embodiment in Fig. 4 is that a switch circuit 10 is provided, allowing to select either the output of the counter 4 and the second constant value. The difference from the operation in the first embodiment is the case when the second constant value is selected by the switch circuit 10. Fig. 5 shows the operation in such state. The first constant value is 4/5 and the second constant value is 0. What differs from the first embodiment in Fig. 2 is that the integer part of the output of the multiplier 5 directly specifies the reading address. By reading out the same address repeatedly, an expanded signal is obtained as output as shown in Fig. 6. Thus, in the circuit of the second embodiment, the two functions of compression and expansion can be changed over by one switch circuit.

In Fig. 4, the first constant value may be set arbitrarily from 0 to 1. Supposing the first constant value to be y, the horizontal expand rate of input video signal may be given as 1/y. The second constant value may be set arbitrarily, and the expanding portion is determined by its value.

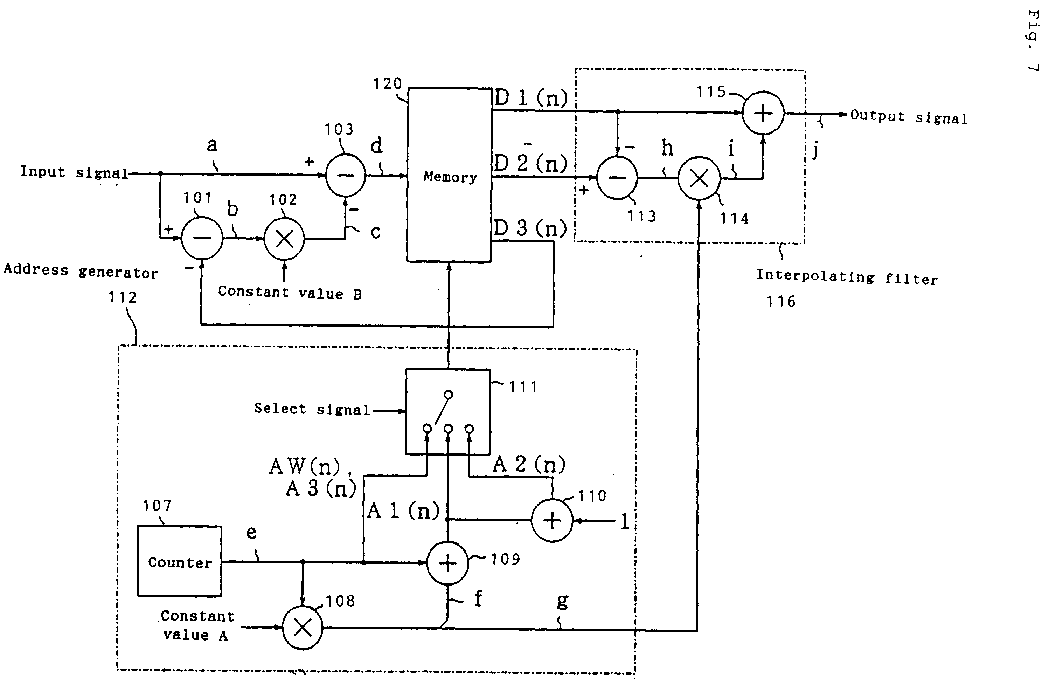

Fig. 7 shows a third embodiment of the invention. A noise eliminating circuit is included in Fig. 7. In Fig. 7, a subtractor 101 subtracts the signal stored in a memory 120 from a video input signal a. A multiplier 102 multiplies an output signal b of the subtractor 101 and a third constant value B. As the third constant value B, a value corresponding to the noise elimination rate (0 to 1.0 ) is set, and this value is determined by the noise occurrence frequency or property. A subtractor 103 subtracts an output signal c of the multiplier 102 from the input signal a. An address generator 112 selects the address of memory 120, and controls signal writing and reading. The subtractors 101 and 103, multiplier 102, memory 120, and address generator 112 compose a noise eliminator.

The address generator 112 comprises a counter 107, a multiplier 108, adders 109 and 110, and a selector 111. The counter 107 counts the number of horizontal sampling pulses of video signal. The multiplier 108 multiplies an output e of the counter 107 and the constant value A. The constant value A is the value for determining the conversion rate of video signal, and when the value is 0, it means no conversion, and as it approaches 1, the conversion rate becomes higher. The adder 109 adds the output e of the counter 107 and the integer part of the output signal of the multiplier 108. The adder 110 adds the output of the adder 109 and integer 1. The selector 111, supposing the output e of the counter 107 as the writing address AW(n) of the memory 120, and the output signals of the adders 109, 110 to be reading addresses A1(n), A2(n) of the memory 120, selects their writing and reading addresses by time division. The selector 111 includes a changeover circuit, and selects the writing and reading address by the select signal fed from outside, and controls the memory 120.

A subtractor 113 subtracts a first output signal D1(n) from a second output signal D2(n) from the memory 120. The first output signal D1(n) is the signal being read out from the memory 120 by the reading address A1(n), and the second output signal D2(n) is the signal being read out from the memory 120 by the reading address A2(n). A multiplier 114 multiplies an output h of the subtractor 113 and a decimal part g of the output signal of the multiplier 108. An adder 115 adds an output signal i of the multiplier 114 and the first output signal D1(n) to obtain an output signal. The subtractor 113, multiplier 114, and adder 115 compose an interpolating filter 116 of video signal converting device.

The memory 120 is a line memory which holds the video input signal d, and stores one horizontal line of video signals for reading out the first to third output signals D1(n) to D3(n) by the address signals supplied from the selector 111, and it is composed of, for example, dual port memory. The output signal D1(n) is a video signal being sampled supposing one line to be n, and it is read out from the memory 120 by the reading address A1(n) without delay. The output signal D2(n) is a video signal delayed from the output signal D1(n) by one sampling point. The output signal D3(n) is a signal delayed from the output signal d of the subtractor 103 by one line, and it is given to the subtraction input terminal of the subtractor 101. The counter 107 gives the output e to the selector 111 as the writing address AW(n) and reading address A3(n).

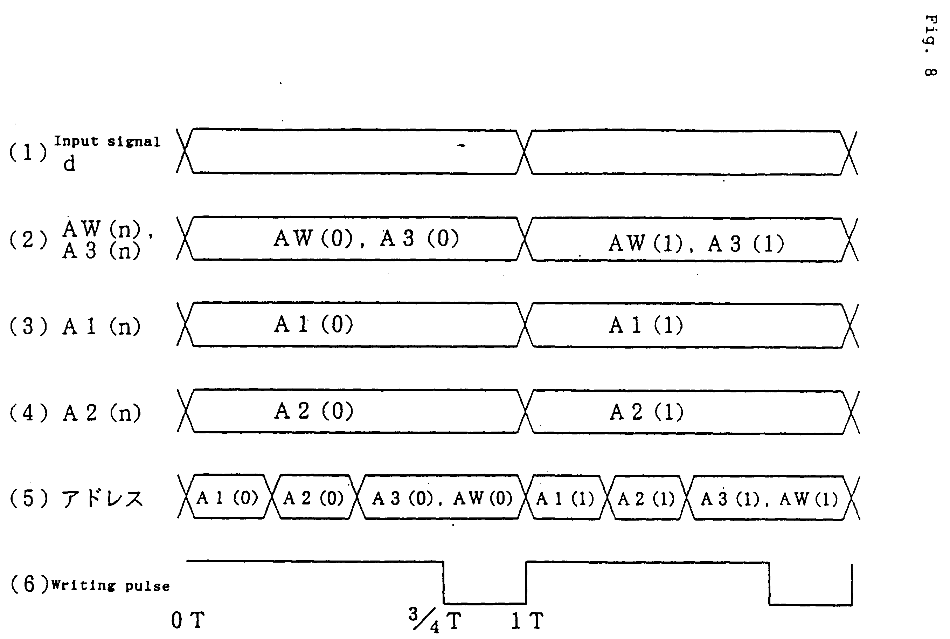

The circuit in Fig. 7 operates as follows (see Figs. 8, 9, 10, and 11). The subtractor 101 subtracts the third output signal D3(n) of one line before as being read out from the memory 120 from the video input signal a. At this time, the address generator 112 generates address signals as shown in Fig. 8(2), Fig. 10(1), and Fig. 11(1), and reading and writing are effected by the pulse shown in Fig. 8(6). In Fig. 8(6), duration of 0T to (3/4)T is the reading period, and (3/4)T to 1T is the writing period. When a select signal is given to the selector 111, the address signals shown in Fig. 8(2) to (4) are sequentially selected, and the address signals are given to the memory 120 in the sequence shown in Fig. 8(5).

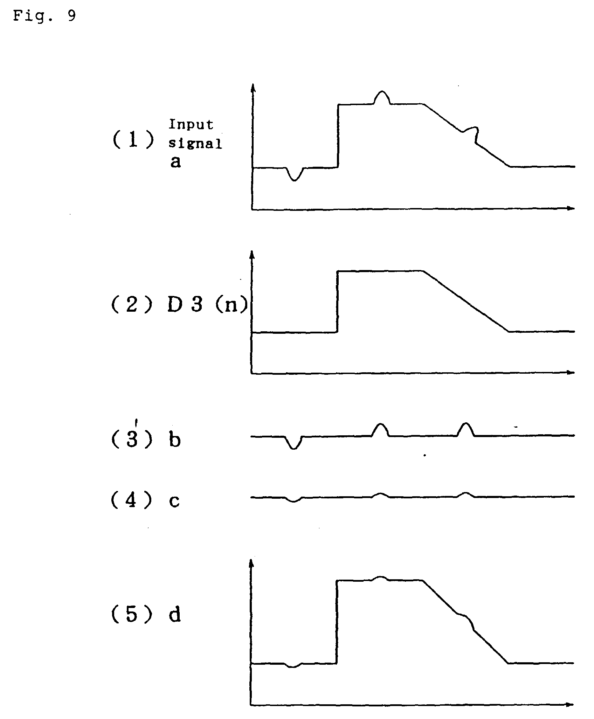

When the signal a containing noise as shown in Fig. 9(1) is entered, the subtractor 101 subtracts the signal D3(n) (see Fig. 9(2)) of one line before being held in the memory 120 from the input signal a, and extracts noise b as shown in Fig. 9(3). The multiplier 102, supposing the constant value B to be 1/2, produces an output c as shown in Fig. 9(4). The subtractor 103 subtracts the output c of the multiplier 102 from the input signal a, and generates a signal d as shown in Fig. 9(5). The address generator 112 generates an address signal, and writes the signal d into the memory 120 when the writing pulse is at low (L) level. This signal is read as output signal D3(n) when the writing pulse is at high (H) level. Thus, a cyclic filter using the memory 120 is composed, so that the noise level included in the input signal can be lowered.

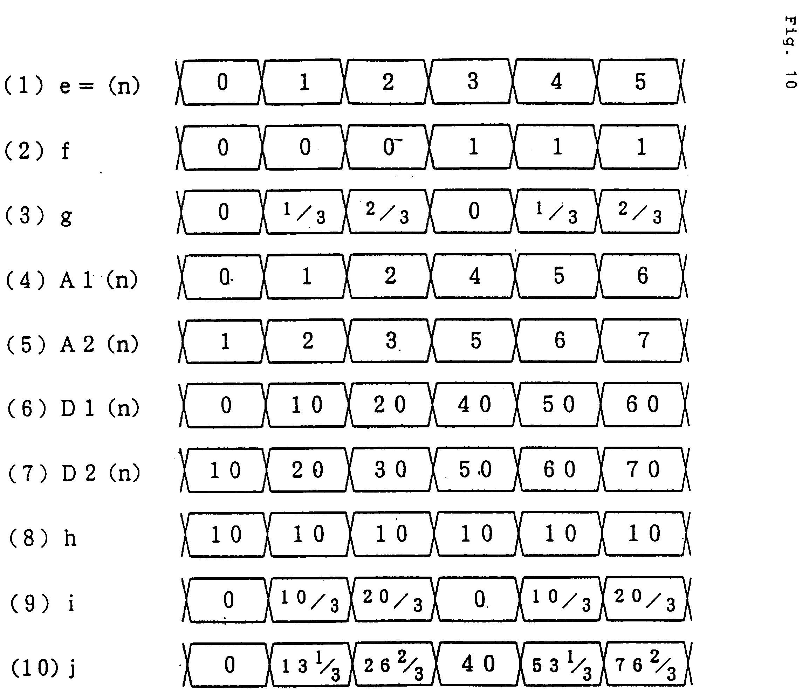

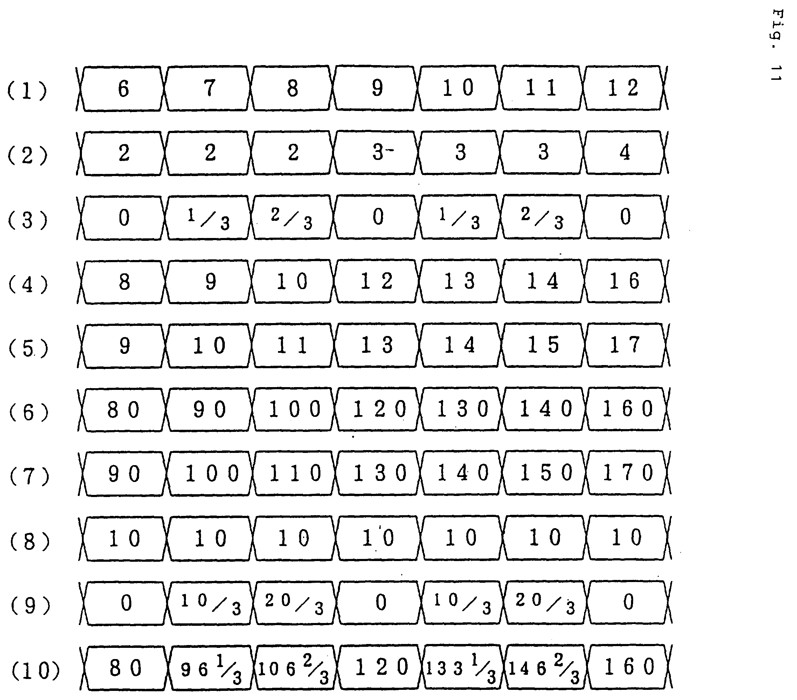

The integer part f and decimal part g of the output of the multiplier 108 are applied to the adder 109 and multiplier 114. The adder 109 adds the output e of the counter 107 and the integer part f, and generates a reading address A1(n). The adder 110 adds 1 to the reading address A1(n) to generate a reading address A2(n). The selector 111 sequentially changes over the writing and reading addresses by the select signal, and produces an address signal shown in Fig. 8(5). When the reading addresses A1(n), A2(n) are given to the memory 120, output signals D1(n) and D2(n) are read out. The subtractor 113 subtracts D1(n) from the output signal D2(n), and generates a signal h. The signal h is given to the multiplier 114 to be multiplied by the decimal part g of the output of the multiplier 108, and a signal i is generated. The adder 115 adds the signal i to the first output signal D1(n), and generates horizontal compressed output signal j as shown in Fig. 10(10) and Fig. 11(10).

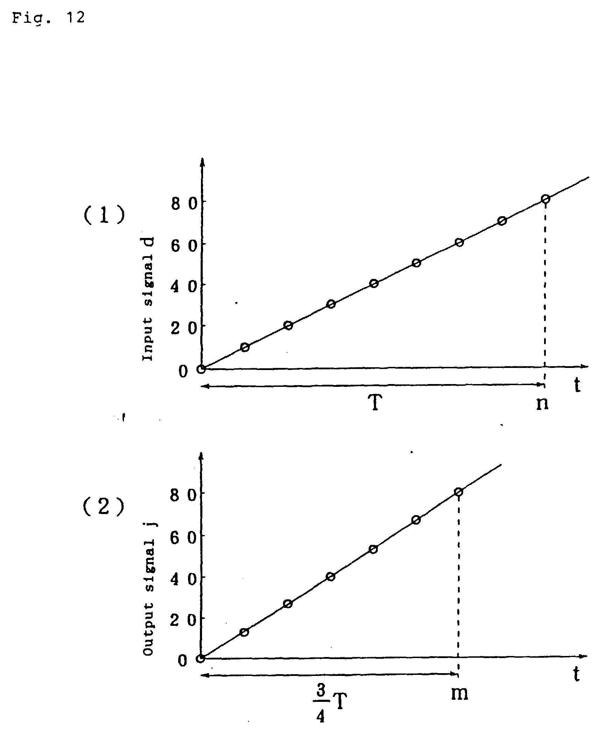

When the input signal d is a ramp signal as shown in Fig. 12(1) and the constant value is 1/3, the output signal j is a signal having the sampling point compressed to 0.75 as shown in Fig. 12(2), and the information at addresses 3, 7, 11, 15, ... is eliminated as shown in Fig. 10 and Fig. 11 (4) and (6). However, by the interpolating processing by the interpolating filter 116, the output signal J is linearly corrected as shown in Fig. 12(2).

The video signal compressing device of the invention obtains a noise eliminating effect suited to video input signal by setting the constant value, and is capable of freely setting the length of horizontal display of the video input signal. Therefore it brings about an excellent effect of displaying the image of high quality in a display device differing in the aspect ratio.

## Claims

1. A video signal converting device for changing the length of a line of a video signal, comprising:
a memory (1,120) for storing the input video signal data,
an address generator (2,112) for generating a read address,
read means for reading out addresses of the memory specified by the address generator,
interpolation means (3,116) for interpolating the read out video data to obtain converted video signal data,
**characterized in that**
the address generator (2,112) comprises a counter (4,107) for counting the number of sampling pulses of the video signal, a multiplier (5,108) for multiplying a first constant value with the counting result, means for separating an integer part (f) and a decimal part (g) from the multiplication result and the address generator provides the integer part as a reading address to the read means,
the read means read out first video signal data specified by a first address which is provided by the address generator (2, 112) and second video signal data from an address next to the first address.

2. A video signal converting device according to claim 1 characterized in that the address generator (2, 112) is comprising a first adder (6,109) for adding the integer part to a second constant value and is providing the result as a reading address to the read means.

3. A video signal converting device according to claim 1 characterized in that the address generator (2, 112) is comprising a first adder (6,109) for adding the integer part to the counting result provided by the counter (4,107) and providing the result as a reading address to the read means.

4. A video signal converting device according to claim 2 and 3 characterized in that the address generator (2, 112) comprises a switch circuit (10) to select one input terminal of the adder (6,109) between the second constant value or the counting result, the other input terminal of the adder (6,109) being the integer part.

5. A video signal converting device according to any of the claims 1 to 4 characterized in that the interpolation means (3,116) calculate converted video signal data by first weighting the difference between the first and second read out video signal data with the decimal part provided by the address generator and second adding the weighted difference to the first video signal data.

6. A video signal converting device according to any of the claims 1 to 5, characterized in that the interpolation means comprise a subtractor (7,113) for calculating the difference between the first and second video signal data, a multiplier (9,114) for multiplying the calculated difference (h) and the decimal part (g) provided by the address generator (2, 112) and providing the multiplication result (i) to an adder (9,115) which is adding the first video signal data to the multiplication result to obtain converted video signal data (j).

7. A video signal converting device according to any of claims 1 to 6 characterized in that the address generator (2, 112) further comprises
a second adder (110) for adding a third constant value to the read address provided to the read means and for supplying the adding result as a next reading address to the read means and
a selector (111) for changing over the address signal from the counter, the first reading address and the next reading address by a select signal and supplying the obtained signal to the read means.

8. A video signal converting device for changing the length of a line of a video signal, comprising:
a memory (1,120) for storing the input video signal data,
an address generator (2,112) for generating a read address,
read means for reading out addresses of the memory specified by the address generator,
interpolation means (3,116) for interpolating the read out video data to obtain converted video signal data,
**characterized in that** the converting device is further comprising a noise eliminator (101, 102, 103) inserted between the input terminal of the converting device for the video signal data and the memory (120) and said noise eliminator being additionally connected with an output of the memory (120) supplying delayed video signal data to said noise eliminator.

9. A video signal converting device according to at least one of claims 1 to 8 characterized in that the noise eliminator comprises a first subtractor (101) for calculating the difference (b) between the incoming video signal (a) and the delayed video signal provided by the memory (120), preferably delayed by one line period of the video signal, and providing the difference to a multiplier (102) which is multiplying the difference with a constant value (B), preferably being 0.5, and is providing the result (c) to a second subtractor (103) which is calculating the difference (d) between the input signal (a) and the multiplication result (c) and is providing the difference (d) to the memory (120).

## Patentansprüche

1. Vorrichtung zur Videosignal-Umwandlung, um die Länge einer Zeile eines Videosignals zu ändern, mit:
einem Speicher (1, 120) zum Speichern der Eingangsvideosignaldaten,
einem Adreßgenerator (2, 112) zum Erzeugen einer Leseadresse,
einer Leseeinrichtung zum Auslesen von Adressen aus dem durch den Adreßgenerator angegebenen Speicher,
einer Interpolationseinrichtung (3, 116) zum Interpolieren der ausgelesenen Videodaten, um umgewandelte Videosignaldaten zu erhalten,
dadurch gekennzeichnet, daß
der Adreßgenerator (2, 112) einen Zähler (4, 107) enthält, um die Anzahl der Abtastimpulse des Videosignals zu zählen, einen Multiplizierer (5, 108) um einen ersten Konstantwert mit dem Zählergebnis zu multiplizieren, eine Einrichtung zum Trennen eines ganzzahligen Teils (f) und eines Dezimalteils (g) vom Multiplikationsergenbnis,
der Adreßgenerator den ganzzahligen Teil als eine Leseadresse an die Leseeinrichtung ausgibt, und
die Leseeinrichtung die ersten durch eine durch den Adreßgenerator (2, 112) erzeugte erste Adresse angegebenen Videosignaldaten und die zweiten Videosignaldaten von einer auf die erste Adresse folgenden nächsten Adresse ausliest.

2. Vorrichtung zur Videosignal-Umwandlung nach Anspruch 1, dadurch gekennzeichnet, daß der Adreßgenerator (2, 112) einen ersten Addierer (6, 109) enthält, um den ganzzahligen Teil zu einem zweiten Konstantwert zu addieren und das Ergebnis als Leseadresse an die Leseeinrichtung auszugeben.

3. Vorrichtung zur Videosignal-Umwandlung nach Anspruch 1, dadurch gekennzeichnet, daß der Adreßgenerator (2, 112) einen ersten Addierer (6, 109) enthält, um den ganzzahligen Teil zu dem durch den Zähler (4, 107) ausgegebenen Zählergebnis zu addieren und als Leseadresse an die Leseeinrichtung auszugeben.

4. Vorrichtung zur Videosignal-Umwandlung nach Anspruch 2 und 3, dadurch gekennzeichnet, daß der Adreßgenerator (2, 112) eine Schaltschaltung (10) enthält, um an einem Eingangsanschluß des Addierers (6, 109) zwischen dem zweiten Konstantwert oder dem Zählergebnis zu wählen, wobei der andere Eingangsanschluß (6, 109) für den ganzzahligen Teil vorgesehen ist.

5. Vorrichtung zur Videosignal-Umwandlung nach einem der Ansprüche 1 bis 4, dadurch gekennzeichnet, daß die Interpolationseinrichtung (3, 116) das umgewandelte Videosignal berechnet, indem sie zuerst die Differenz zwischen den ersten und den zweiten ausgelesenen Videosignaldaten mit dem durch den Adreßgenerator ausgegebenen Dezimalteil gewichtet und dann die gewichtete Differenz zu den ersten Videosignaldaten addiert.

6. Vorrichtung zur Videosignal-Umwandlung nach einem der Ansprüche 1 bis 5, dadurch gekennzeichnet, daß die Interpolationseinrichtung einen Subtrahierer (7, 113) zum Berechnen der Differenz zwischen den ersten und den zweiten Videosignaldaten enthält und einen Multiplizierer (9, 114) zum Multiplizieren der berechneten Differenz (h) und dem durch den Adreßgenerator ausgegebenen Dezimalteil (g) und zum Ausgeben des Multiplikationsergebnisses (i) an einen Addierer (9, 115), der die ersten Videosignaldaten zu dem Multiplikationsergebnis addiert, um die umgewandelten Videosignaldaten (j) zu erhalten.

7. Vorrichtung zur Videosignal-Umwandlung nach einem der Ansprüche 1 bis 6, dadurch gekennzeichnet, daß der Adreßgenerator (2, 112) weiterhin enthält:
einen zweiten Addierer (110) zum Addieren des dritten Konstantwertes zu der an die Leseeinrichtung ausgegebenen Leseadresse und zum Bereitstellen des Additionsergebnisses als einer nächsten Leseadresse für die Leseeinrichtung, und
einen Selektor (111) zum Wechseln zwischen dem Adreßsignal vom Zähler, der ersten Leseadresse und der nächsten Leseadresse in Übereinstimmung mit einem Wählsignal und zum Ausgeben des erhaltenen Signals an die Leseeinrichtung.

8. Vorrichtung zur Videosignal-Umwandlung, um die Länge einer Zeile eines Videosignals zu verändern, mit:
einem Speicher (1, 120) zum Speichern der Eingangsvideosignaldaten
einem Adreßgenerator (2, 112) zum Erzeugen einer Leseadresse,
einer Leseeinrichtung zum Auslesen von Adressen aus dem durch den Adreßgenerator angegebenen Speicher,
einer Interpolationseinrichtung (3, 116) zum Interpolieren der ausgelesenen Videodaten, um umgewandelte Videosignaldaten zu erhalten,
dadurch gekennzeichnet, daß die Umwandlungsvorrichtung weiterhin einen Rauschunterdrücker (101, 102, 103) enthält, der zwischen dem Eingangsanschluß der Umwandlungsvorrichtung für die Videosignaldaten und dem Speicher (120) eingefügt ist, wobei der Rauschunterdrücker zusätzlich mit einem Ausgang des Speichers (120) verbunden ist, der verzögerte Videosignaldaten an den Rauschunterdrücker ausgibt.

9. Vorrichtung zur Videosignal-Umwandlung nach wenigstens einem der Ansprüche 1 bis 8, dadurch gekennzeichnet, daß der Rauschunterdrücker einen ersten Subtrahierer (101) zum Berechnen der Differenz (b) zwischen dem eingehenden Videosignal (a) und dem vom Speicher (120) ausgegebenen verzögerten Videosignal, das vorzugsweise um eine Zeilenperiode des Videosignals verzögert ist, berechnet und die Differenz an einen Multiplizierer (102) ausgibt, der die Differenz mit einem Konstantwert (B), der vorzugsweise 0,5 beträgt, multipliziert und das Ergebnis (c) an einen zweiten Subtrahierer (103) ausgibt, der die Differenz zwischen dem Eingangssignal (a) und dem Multiplikationsergebnis (c) berechnet und die Differenz (d) an den Speicher (120) ausgibt.

## Revendications

1. Dispositif de conversion de signal vidéo destiné à modifier la longueur d'une ligne d'un signal vidéo, comportant :
une mémoire (1, 120) pour mémoriser les données de signal vidéo d'entrée,
un générateur d'adresses (2, 112) pour engendrer une adresse de lecture,
des moyens de lecture pour extraire de la mémoire des adresses spécifiées par le générateur d'adresses,
des moyens d'interpolation (3, 116) pour interpoler les données vidéo extraites afin d'obtenir des données de signal vidéo converties,
caractérisé en ce que
le générateur d'adresses (2, 112) comporte un compteur (4, 107) pour compter le nombre d'impulsions d'échantillonnage du signal vidéo, un multiplicateur (5, 108) pour multiplier une première valeur constante par le résultat du comptage, des moyens pour séparer une partie entière (f) et une partie décimale (g) du résultat de la multiplication et le générateur d'adresses délivre la partie entière en tant qu'adresse de lecture aux moyens de lecture,
les moyens de lecture extraient des premières données de signal vidéo spécifiées par une première adresse qui est délivrée par le générateur d'adresses (2, 112) et des secondes données de signal vidéo à partir d'une adresse consécutive à la première adresse.

2. Dispositif de conversion de signal vidéo selon la revendication 1, caractérisé en ce que le générateur d'adresses (2, 112) est constitué d'un premier additionneur (6, 109) destiné à ajouter la partie entière à une deuxième valeur constante et délivre le résultat en tant qu'adresse de lecture aux moyens de lecture.

3. Dispositif de conversion de signal vidéo selon la revendication 1, caractérisé en ce que le générateur d'adresses (2, 112) est constitué d'un premier additionneur (6, 109) destiné à ajouter la partie entière au résultat de comptage délivré par le compteur (4, 107) et délivre le résultat en tant qu'adresse de lecture aux moyens de lecture.

4. Dispositif de conversion de signal vidéo selon les revendications 2 et 3, caractérisé en ce que le générateur d'adresses (2, 112) comporte un circuit de commutation (10) destiné à sélectionner, afin de l'envoyer sur une première borne d'entrée de l'additionneur (6, 109), la deuxième valeur constante ou le résultat de comptage, l'autre borne d'entrée de l'additionneur (6, 109) recevant la partie entière.

5. Dispositif de conversion de signal vidéo selon l'une quelconque des revendications 1 à 4, caractérisé en ce que les moyens d'interpolation (3, 116) calculent les données de signal vidéo converties en pondérant tout d'abord la différence entre les premières et secondes données de signal vidéo extraites, la partie décimale étant délivrée par le générateur d'adresses, et en ajoutant ensuite la différence pondérée aux premières données de signal vidéo.

6. Dispositif de conversion de signal vidéo selon l'une quelconque des revendications 1 à 5, caractérisé en ce que les moyens d'interpolation comportent un soustracteur (7, 113) pour calculer la différence entre les premières et secondes données de signal vidéo, un multiplicateur (9, 114) pour multiplier la différence calculée (h) et la partie décimale (g) délivrée par le générateur d'adresses (2, 112) et délivrer le résultat de la multiplication (i) à un additionneur (9, 115) qui ajoute les premières données de signal vidéo au résultat de la multiplication afin d'obtenir les données de signal vidéo converties (j).

7. Dispositif de conversion de signal vidéo selon l'une quelconque des revendications 1 à 6, caractérisé en ce que le générateur d'adresses (2, 112) comporte en outre
un second additionneur (110) pour ajouter une troisième valeur constante à l'adresse de lecture délivrée aux moyens de lecture et délivrer le résultat de l'addition en tant qu'adresse de lecture suivante aux moyens de lecture et
un sélecteur (111) pour permuter entre le signal d'adresse provenant du compteur, la première adresse de lecture et l'adresse de lecture suivante par l'intermédiaire d'un signal de sélection et délivrer le signal obtenu aux moyens de lecture.

8. Dispositif de conversion de signal vidéo destiné à modifier la longueur d'une ligne d'un signal vidéo, comportant :
une mémoire (1, 120) pour mémoriser les données de signal vidéo d'entrée,
un générateur d'adresses (2, 112) pour engendrer une adresse de lecture,
des moyens de lecture pour extraire de la mémoire des adresses spécifiées par le générateur d'adresses,
des moyens d'interpolation (3, 116) pour interpoler les données vidéo extraites afin d'obtenir des données de signal vidéo converties,
caractérisé en ce que le dispositif de conversion est en outre constitué d'un éliminateur de bruit (101, 102, 103) inséré entre la borne d'entrée du dispositif de conversion des données de signal vidéo et la mémoire (120), et ledit éliminateur de bruit étant de plus connecté à une sortie de la mémoire (12C) délivrant des données de signal vidéo retardées audit éliminateur de bruit.

9. Dispositif de conversion de signal vidéo selon au moins l'une des revendications 1 à 8, caractérisé en ce que l'éliminateur de bruit comporte un premier soustracteur (101) destiné à calculer la différence (b) entre le signal vidéo entrant (a) et le signal vidéo retardé délivré par la mémoire (120), d'une manière préférée retardé de une période de ligne du signal vidéo, et à délivrer la différence à un multiplicateur (102) qui multiplie la différence par une valeur constante (B), d'une manière préférée égale à 0,5, et qui délivre le résultat (c) à un second soustracteur (103) qui calcule la différence (d) entre le signal d'entrée (a) et le résultat de la multiplication (c) et délivre la différence (d) à la mémoire (120).
